# EUROPEAN PATENT APPLICATION

(11) **EP 4 653 232 A1**
(43) Date of publication of application: **26.11.2025**
(21) Application number: 25178153.0
(22) Date of filing: 22.05.2025
(51) Int. Cl.: B60L 1/14, B60L 3/00, B60L 58/20, H02J 7/00, B60R 16/023, H02J 9/00

(54) **POWER SUPPLY SYSTEM**

(30) Priority: 24.05.2024 JP 2024084704
(71) Applicant: Suzuki Motor Corporation, Shizuoka 432-8611 (JP)
(72) Inventor: TACHIBANA, Toshihide, Hamamatsu-shi (JP); YOSHIDA, Shogo, Hamamatsu-shi (JP); FUKUTOMI, Naoki, Hamamatsu-shi (JP); MIYASHITA, Koichiro, Hamamatsu-shi (JP)
(74) Representative: Haseltine Lake Kempner LLP

(57) **Abstract**

A power supply system (1) of a vehicle on which an electrical component (13) and an electric motor (11) are mounted. The power supply system (1) includes: an electrical component battery (14) supplies power to the component; a drive battery (12) supplies power to the motor; a converter (16) steps down the power of the drive battery and output the stepped-down power to the electrical component battery; and a controller (21) driven by the power of the electrical component battery and control the converter. The controller controls the converter to charge the electrical component battery using the power of the drive battery in a case in which: a voltage of the electrical component battery is less than a normal operation voltage of the controller when a main switch (22) is turned on; and the voltage becomes equal to or more than the normal operation voltage when the main switch is turned off.

## Description

### TECHNICAL FIELD

The present invention relates to a power supply system.

### BACKGROUND ART

In recent years, a straddle-type vehicle using an electric motor as a power source is being developed. In addition to a drive battery used for the electric motor, an electrical component battery (auxiliary battery) used for an electrical component such as a lighting device is mounted on the straddle-type vehicle. The electrical component battery is charged with electric power of the drive battery, but the drive battery has a voltage higher than that of the electrical component battery, and thus the drive battery is connected to the electrical component battery via a DC/DC converter. The voltage of the drive battery is stepped down by the DC/DC converter, and then the electrical component battery is charged (see, for example, Patent Literature 1).

### CITATION LIST

### PATENT LITERATURE

Patent Literature 1: JP2016-203953A

When the vehicle is left unattended, the voltage of the electrical component battery drops due to dark current or natural discharge, and the vehicle is unable to travel in a case in which the voltage of the electrical component battery is less than a normal operation voltage of a controller when a main switch is turned on.

### SUMMARY

The present invention has been made in view of the above, and an object of the present invention is to provide a power supply system that has a simple and inexpensive configuration and that can prevent a vehicle from being unable to travel due to drop in a voltage of a battery.

The above problem is solved by a power supply system according to an aspect of the present invention. The power supply system is a power supply system of a vehicle on which an electrical component and an electric motor are mounted, and the power supply system includes: an electrical component battery configured to supply electric power to the electrical component; a drive battery configured to supply electric power to the electric motor; a converter configured to step down the electric power of the drive battery and output the stepped-down electric power to the electrical component battery; and a controller configured to be driven by the electric power of the electrical component battery and control the converter. The controller controls the converter to charge the electrical component battery using the electric power of the drive battery in a case in which a voltage of the electrical component battery is less than a normal operation voltage of the controller when a main switch is turned on and the voltage of the electrical component battery becomes equal to or more than the normal operation voltage of the controller when the main switch is turned off.

According to the aspect of the present invention, when the main switch is turned on and the voltage of the electrical component battery is less than the normal operation voltage of the controller, the vehicle is unable to travel. However, when the main switch is turned off and the voltage of the electrical component battery becomes equal to or more than the normal operation voltage of the controller, the controller controls the converter to charge the electrical component battery. Therefore, when the main switch is turned on next time, the voltage of the electrical component battery becomes the normal operation voltage of the controller, and the vehicle is able to travel. It is not necessary to constantly monitor the electrical component battery, and electric power consumption of the drive battery is reduced. Since a dedicated circuit is also unnecessary, a cost can be reduced.

### BRIEF DESCRIPTION OF DRAWINGS

FIG. 1 is a wiring diagram of a power supply system according to the present embodiment.
FIG. 2 is a flowchart of a general charging operation for an electrical component battery.
FIG. 3 is a time chart of a charging operation of the electrical component battery according to the present embodiment.
FIG. 4 is a flowchart of a charging operation for the electrical component battery according to the present embodiment.

A vehicle according to an aspect of the present invention is mounted with an electrical component and an electric motor. A power supply system of the vehicle is provided with an electrical component battery that supplies electric power to the electrical component and a drive battery that supplies electric power to the electric motor. The electric power of the drive battery is stepped down by a converter and output to the electrical component battery. The converter is controlled by a controller using the electric power of the electrical component battery. In a case in which a voltage of the electrical component battery is less than a normal operation voltage of the controller when a main switch is turned on, the vehicle is unable to travel. However, in a case in which the voltage of the electrical component battery becomes equal to or more than the normal operation voltage of the controller when the main switch is turned off, the controller controls the converter to charge the electrical component battery using the electric power of the drive battery. Therefore, when the main switch is turned on next time, the voltage of the electrical component battery becomes the normal operation voltage of the controller, and the vehicle is able to travel. It is not necessary to constantly monitor the electrical component battery, and electric power consumption of the drive battery is reduced. Since a dedicated circuit is also unnecessary, a cost can be reduced.

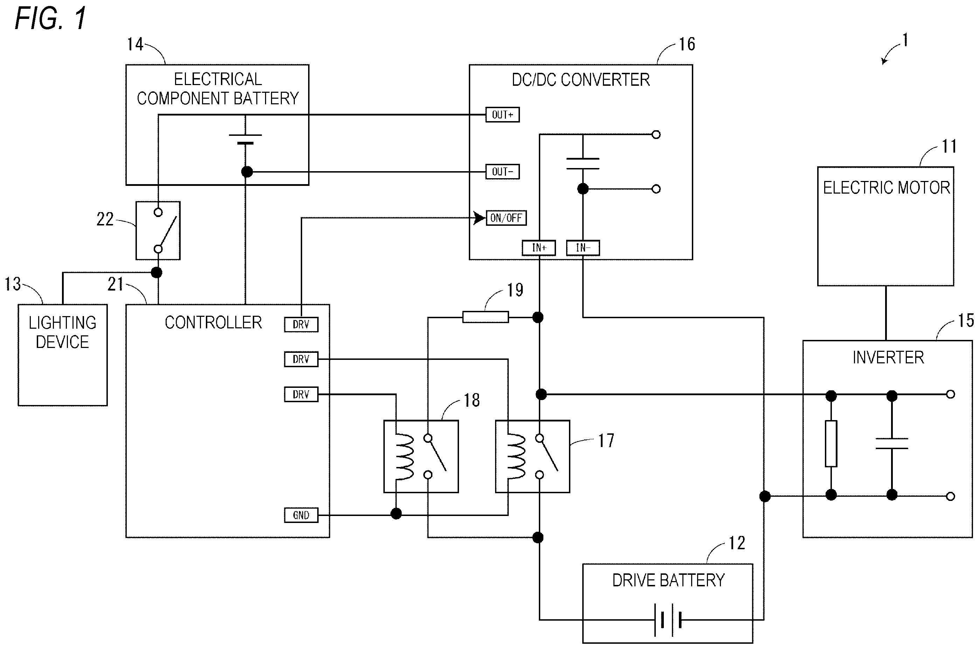

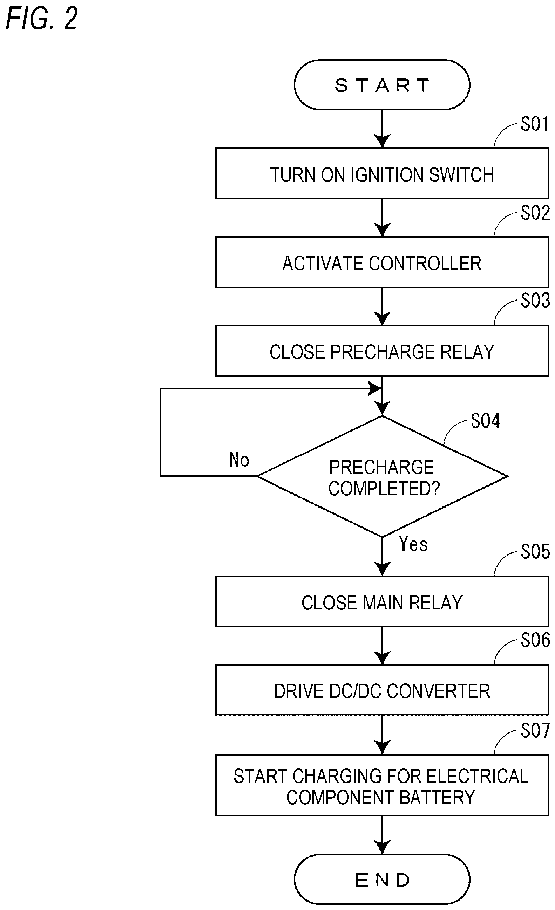

Hereinafter, a power supply system according to the present embodiment will be described with reference to the accompanying drawings. FIG. 1 is a wiring diagram of the power supply system according to the present embodiment. FIG. 2 is a flowchart of a general charging operation for an electrical component battery.

As shown in FIG. 1, a power supply system 1 is provided with a drive battery 12 that supplies electric power to an electric motor 11 and an electrical component battery 14 that supplies electric power to an electrical component such as a lighting device 13. A parallel circuit including an inverter 15 and a DC/DC converter 16 is connected to the drive battery 12. A main relay 17 is provided on a connection line extending from a positive terminal of the drive battery 12 to a positive input terminal of the inverter 15 and a positive input terminal of the DC/DC converter 16. A precharge relay 18 and a precharge resistor 19 are connected in parallel with the main relay 17.

The electric motor 11 is connected to an output terminal of the inverter 15. The electric motor 11 is controlled by the inverter 15 using the electric power of the drive battery 12. The electrical component battery 14 is connected to an output terminal of the DC/DC converter 16. The electric power of the drive battery 12 is stepped down to a desired voltage (12 V in the present embodiment) by the DC/DC converter 16 and output to the electrical component battery 14. The electrical component battery 14 is charged using the electric power converted by the DC/DC converter 16. A controller 21 and the electrical component such as the lighting device 13 are connected to the electrical component battery 14 via an ignition switch (main switch) 22.

The main relay 17, the precharge relay 18, and the DC/DC converter 16 are connected to the controller 21, and the main relay 17, the precharge relay 18, and the DC/DC converter 16 are controlled by the controller 21. Although the controller 21 is connected to the electrical component battery 14 via the ignition switch 22, the electric power is directly supplied from the electrical component battery 14 to the controller 21 in order to maintain some functions of the controller 21 even when the ignition switch 22 is in an off state. The electrical component such as the lighting device 13 is turned on/off in conjunction with the ignition switch 22 being turned on/off.

As shown in FIGS. 1 and 2, when the ignition switch 22 is turned on (step S01), the controller 21 is activated by the electric power of the electrical component battery 14 (step S02). When the controller 21 is activated, the controller 21 outputs a control signal to the precharge relay 18 to close the precharge relay 18 (step S03). Accordingly, the electric power is supplied from the drive battery 12 to the inverter 15 via the precharge relay 18 and the precharge resistor 19, and the inverter 15 starts to be precharged while inrush current is limited by the precharge resistor 19.

When the precharging of the inverter 15 is completed (Yes in step S04), the controller 21 outputs a control signal to the main relay 17 to close the main relay 17 (step S05). The electric power is supplied from the drive battery 12 to the DC/DC converter 16, and the controller 21 outputs a control signal to the DC/DC converter 16 to drive the DC/DC converter 16 (step S06). A voltage of the drive battery 12 is stepped down by the DC/DC converter 16, and charging for the electrical component battery 14 is started by the DC/DC converter 16 (step S07).

The controller 21 is set with an activation voltage necessary for activation and a normal operation voltage at which all functions can be used. The controller 21 operates in a normal mode and an electric power saving mode according to a voltage of the electrical component battery 14. When the voltage of the electrical component battery 14 is equal to or more than the normal operation voltage, the controller 21 enters the normal mode, and activation processing for a vehicle system is performed to enable the vehicle to travel. When the voltage of the electrical component battery 14 is equal to or more than the activation voltage and less than the normal operation voltage, the controller 21 enters the electric power saving mode, and a function that consumes less electric power can be used, but a function that consumes more electric power such as relay driving or the activation processing for the vehicle system cannot be used.

When the vehicle is left unattended for a long time, voltage of the electrical component battery 14 drops due to dark current of a vehicle load or natural discharge of the electrical component battery 14. In a case in which the voltage of the electrical component battery 14 becomes equal to or more than the activation voltage and less than the normal operation voltage when the ignition switch 22 is turned on, the controller 21 enters the electric power saving mode and cannot perform the relay driving that consumes more electric power. Therefore, the main relay 17 and the precharge relay 18 are not closed, and the electrical component battery 14 cannot be charged by the DC/DC converter 16 using the electric power of the drive battery 12. In the electric power saving mode, the controller 21 cannot perform the activation processing for the vehicle system, and the vehicle is unable to travel.

The voltage of the electrical component battery 14 varies depending on magnitude of an electrical component load of the vehicle. For example, the electrical component having the largest load with respect to the electrical component battery 14 is the lighting device 13. When the lighting device 13 is turned on, the voltage of the electrical component battery 14 greatly drops. As described above, the electrical component is turned on/off in conjunction with the ignition switch 22 being turned on/off. Therefore, when the ignition switch 22 is turned on, the voltage of the electrical component battery 14 is less than the normal operation voltage by turning on the lighting device 13, but when the ignition switch 22 is turned off and the lighting device 13 is turned off, the voltage of the electrical component battery 14 may be recovered to the normal operation voltage or more.

Therefore, in the present embodiment, in a case in which the voltage of the electrical component battery 14 is recovered to the normal operation voltage or more when the ignition switch 22 is turned off, the controller 21 drives the relay and the DC/DC converter 16 to charge the electrical component battery 14. Accordingly, even in a case in which the lighting device 13 is turned on when the ignition switch 22 is turned on next time, the voltage of the electrical component battery 14 becomes equal to or more than the normal operation voltage, and the vehicle is able to travel. The controller 21 monitors the electrical component battery 14 only when the ignition switch 22 is turned on/off, thereby reducing the electric power consumption of the drive battery 12 is reduced, and a cost is reduced by using the existing system.

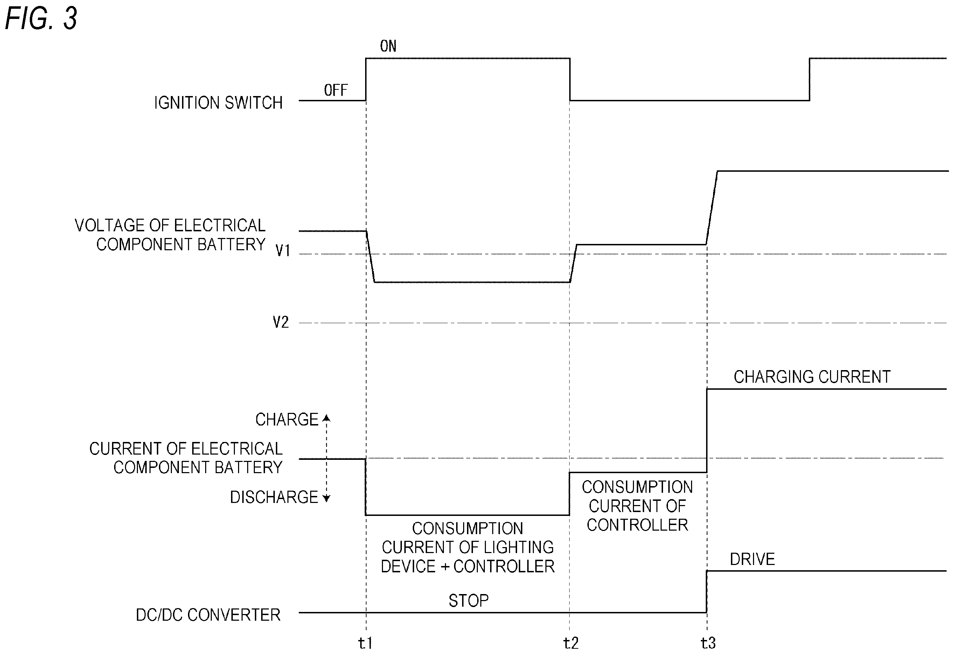

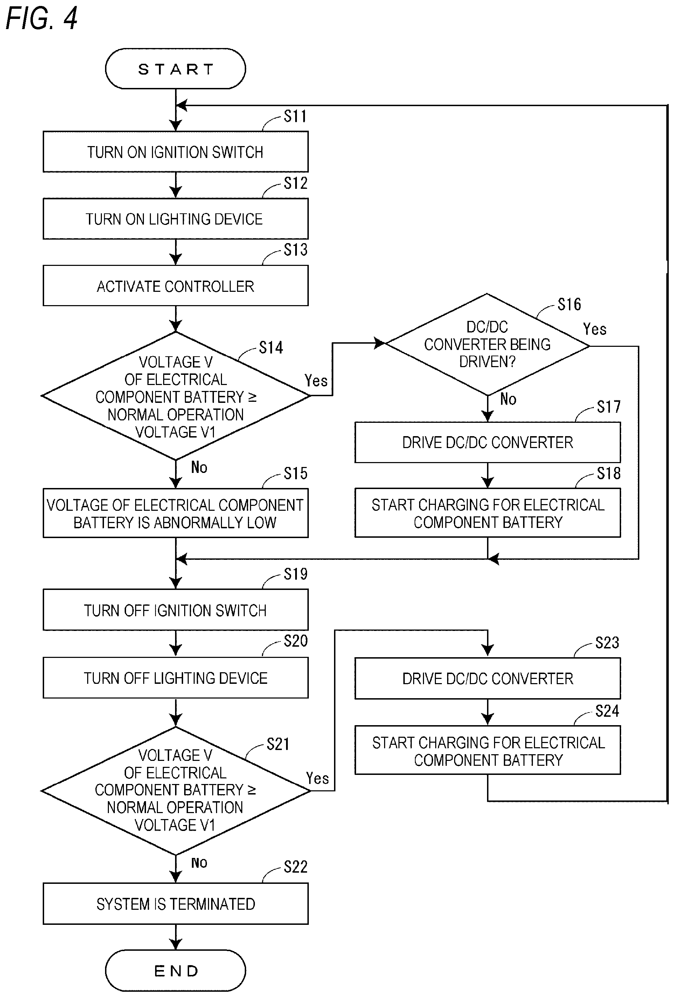

Charging control for the electrical component battery will be described with reference to FIGS. 3 and 4. FIG. 3 is a time chart of a charging operation of the electrical component battery according to the present embodiment. FIG. 4 is a flowchart of a charging operation for the electrical component battery according to the present embodiment. In the following description, the reference numerals in FIG. 1 will be appropriately used. The following time chart and flowchart are merely examples, and can be appropriately changed.

As shown in FIG. 3, when the ignition switch 22 is turned off, the voltage of the electrical component battery 14 becomes equal to or more than a normal operation voltage V1. When the ignition switch 22 is turned on at a time t1, the lighting device 13 is turned on in conjunction with the ignition switch 22 being turned on. Current is supplied from the electrical component battery 14 to the lighting device 13 and the controller 21, and the voltage of the electrical component battery 14 becomes less than the normal operation voltage V1 and equal to or more than an activation voltage V2 due to the current consumption of the lighting device 13 and the controller 21. Since the controller 21 operates in the electric power saving mode, the electrical component battery 14 cannot be charged, and the vehicle is unable to travel.

When the ignition switch 22 is turned off at a time t2, the lighting device 13 is turned off in conjunction with the ignition switch 22 being turned off. No current is supplied from the electrical component battery 14 to the lighting device 13 and only the current consumption of the controller 21 occurs, and thus the voltage of the electrical component battery 14 becomes equal to or more than the normal operation voltage V1. The controller 21 switches from the electric power saving mode to the normal mode, and the precharge relay 18 is closed by the controller 21. The inrush current is limited by the precharge resistor 19, and the inverter 15 is precharged by the electric power of the drive battery 12 until a predetermined time elapses.

At a time t3, the controller 21 closes the main relay 17 and drives the DC/DC converter 16. The voltage of the drive battery 12 is stepped down by the DC/DC converter 16, and the current is supplied from the drive battery 12 to the electrical component battery 14 through the DC/DC converter 16. Accordingly, the voltage of the electrical component battery 14 is sufficiently boosted. Even when the ignition switch 22 is turned on again, the voltage of the electrical component battery 14 becomes equal to or more than the normal operation voltage V1. Since the controller 21 operates in the normal mode, the vehicle system can be activated and the vehicle is able to travel.

As shown in FIG. 4, when the ignition switch 22 is turned on (step S11), the lighting device 13 is turned on by the electric power of the electrical component battery 14 (step S12). The controller 21 is activated by the electric power of the electrical component battery 14 (step S13). The controller 21 monitors the voltage V of the electrical component battery 14, and determines whether the voltage V of the electrical component battery 14 is equal to or more than the normal operation voltage V1 (step S14). When the voltage V of the electrical component battery 14 is less than the normal operation voltage V1 (No in step S14), the voltage of the electrical component battery 14 is abnormally low, and the vehicle is unable to travel (step S15).

In contrast, when the voltage V of the electrical component battery 14 is equal to or more than the normal operation voltage V1 (Yes in step S14), the controller 21 determines whether the DC/DC converter 16 is being driven (step S16). When the DC/DC converter 16 is stopped (No in step S16), the controller 21 closes the relays 17 and 18 sequentially and then drives the DC/DC converter 16 (step S17). The voltage of the drive battery 12 is stepped down by the DC/DC converter 16, and charging for the electrical component battery 14 is started by the DC/DC converter 16 (step S18).

Next, when the ignition switch 22 is turned off (step S19), the electric power supply from the electrical component battery 14 is stopped, and the lighting device 13 is turned off (step S20). In response to the turning off of the lighting device 13, the voltage V of the electrical component battery 14 is boosted, and the controller 21 determines whether the voltage V of the electrical component battery 14 is equal to or more than the normal operation voltage V1 (step S21). When the voltage V of the electrical component battery 14 is less than the normal operation voltage V1 (No in step S21), the function of the controller 21 is limited, and the electrical component battery 14 cannot be charged, so that the system is terminated (step S22).

In contrast, when the voltage V of the electrical component battery 14 is equal to or more than the normal operation voltage V1 (Yes in step S21), the controller 21 closes the relays 17 and 18 sequentially and then drives the DC/DC converter 16 (step S23). The voltage of the drive battery 12 is stepped down by the DC/DC converter 16, and the charging for the electrical component battery 14 is started by the DC/DC converter 16 (step S24). Accordingly, even when the ignition switch 22 is turned on again and the lighting device 13 is turned on, the voltage V of the electrical component battery 14 is maintained at the normal operation voltage V1 or more, and the vehicle is able to travel.

In step S24, the controller 21 may control the DC/DC converter 16 to stop the charging for the electrical component battery 14 after a certain period of time elapses from the start of the charging. Deterioration of the electrical component battery 14 due to overcharging can be prevented by charging the electrical component battery 14 for the certain period of time.

As described above, according to the power supply system 1 according to the present embodiment, the vehicle is unable to travel when the voltage of the electrical component battery 14 becomes less than the normal operation voltage by turning on the lighting device 13 in conjunction with the ignition switch 22 being turned on. Even in this case, when the voltage of the electrical component battery 14 becomes equal to or more than the normal operation voltage by turning off the lighting device 13 in conjunction with the ignition switch 22 being turned off, the controller 21 controls the DC/DC converter 16 to charge the electrical component battery 14. Therefore, even when the lighting device 13 is turned on in conjunction with the ignition switch 22 being turned on next time, the voltage of the electrical component battery 14 becomes equal to or more than the normal operation voltage, and the vehicle is able to travel. It is not necessary to constantly monitor the electrical component battery 14, and electric power consumption of the drive battery 12 is reduced. Since a dedicated circuit is also unnecessary, a cost can be reduced.

Various types of processing performed by the controller may be implemented by software using a processor, or may be implemented by a logic circuit (hardware) formed in an integrated circuit or the like. When a processor is used, the processor reads and executes programs stored in a memory, thereby performing various types of processing. As the processor, for example, a central processing unit (CPU) is used. The memory is implemented by one or more storage media such as a read only memory (ROM) and a random access memory (RAM) according to the use.

The power supply system according to the present embodiment is not limited to being used in a straddle-type vehicle, and may be used in another vehicle such as a four-wheeled motor vehicle. The straddle-type vehicle is not limited to a general vehicle in which a driver rides on a seat in a posture of straddling the seat, and includes a scooter-type vehicle in which the driver rides on the seat without straddling the seat.

As described above, the first aspect is a power supply system (1) of a vehicle on which an electrical component (lighting device 13) and an electric motor (11) are mounted, the power supply system (1) including: an electrical component battery (14) configured to supply electric power to the electrical component; a drive battery (12) configured to supply electric power to the electric motor; a converter (DC/DC converter 16) configured to step down the electric power of the drive battery and output the stepped-down electric power to the electrical component battery; and a controller (21) configured to be driven by the electric power of the electrical component battery and control the converter, in which the controller controls the converter to charge the electrical component battery using the electric power of the drive battery in a case in which a voltage of the electrical component battery is less than a normal operation voltage of the controller when a main switch (ignition switch 22) is turned on and the voltage of the electrical component battery becomes equal to or more than the normal operation voltage of the controller when the main switch is turned off. According to this configuration, when the main switch is turned on and the voltage of the electrical component battery is less than the normal operation voltage of the controller, the vehicle is unable to travel. However, when the main switch is turned off and the voltage of the electrical component battery becomes equal to or more than the normal operation voltage of the controller, the controller controls the converter to charge the electrical component battery. Therefore, when the main switch is turned on next time, the voltage of the electrical component battery becomes the normal operation voltage of the controller, and the vehicle is able to travel. It is not necessary to constantly monitor the electrical component battery, and the electric power consumption of the drive battery is reduced. Since the dedicated circuit is also unnecessary, the cost can be reduced.

In a second aspect according to the first aspect, the controller controls the converter to stop charging the electrical component battery after a certain period of time elapses from start of the charging. According to this configuration, the deterioration of the electrical component battery due to overcharging can be prevented by charging the electrical component battery for the certain period of time.

In a third aspect according to the first aspect or the second aspect, the electrical component is turned on/off in conjunction with the main switch being turned on/off. According to this configuration, the voltage of the electrical component battery may become less than the normal operation voltage of the controller by turning on the electrical component in conjunction with the main switch being turned on. Even in this case, the electrical component battery is charged when the voltage of the electrical component battery becomes equal to or more than the normal operation voltage of the controller by turning off the electrical component in conjunction with the main switch being turned off. Even when the electrical component is turned on in conjunction with the main switch being turned on next time, the voltage of the electrical component battery becomes equal to or more than the normal operation voltage of the controller, and the vehicle is able to travel.

In a fourth aspect according to the third aspect, the voltage of the electrical component battery is less than the normal operation voltage of the controller due to current consumption of the electrical component and the controller when the main switch is turned on, and the voltage of the electrical component battery is equal to or more than the normal operation voltage of the controller when the main switch is turned off since only the current consumption of the controller occurs. According to this configuration, when the electrical component is turned on in conjunction with the main switch being turned on, the voltage of the electrical component battery may become less than the normal operation voltage of the controller due to the current consumption of the electrical component and the controller. Even in this case, the electrical component battery is charged when only the current consumption of the controller occurs and the voltage of the electrical component battery becomes equal to or more than the normal operation voltage of the controller by turning off the electrical component in conjunction with the main switch being turned off.

Although the present embodiment has been described, as another embodiment, the above-described embodiment and modification may be combined entirely or partially.

The technique according to the present invention is not limited to the above embodiment, and may be variously changed, replaced, or modified without departing from the gist of the technical concept. Further, the present invention may be implemented by other methods as long as the technical concept can be implemented by the methods by advance of the technique or other derivative techniques. Therefore, the claims cover all embodiments that may fall within the scope of the technical concept.

### REFERENCE SIGNS LIST

1: power supply system
11: electric motor
12: drive battery
13: lighting device (electrical component)
14: electrical component battery
16: DC/DC converter (converter)
21: controller
22: Ignition switch (main switch)

## Claims

1. A power supply system (1) of a vehicle on which an electrical component (13) and an electric motor (11) are mounted, the power supply system (1) comprising:
an electrical component battery (14) configured to supply electric power to the electrical component;
a drive battery (12) configured to supply electric power to the electric motor;
a converter (16) configured to step down the electric power of the drive battery and output the stepped-down electric power to the electrical component battery; and
a controller (21) configured to be driven by the electric power of the electrical component battery and control the converter, wherein
the controller controls the converter to charge the electrical component battery using the electric power of the drive battery in a case in which: a voltage of the electrical component battery is less than a normal operation voltage of the controller when a main switch (22) is turned on; and the voltage of the electrical component battery becomes equal to or more than the normal operation voltage of the controller when the main switch is turned off.

2. The power supply system according to claim 1, wherein
the controller controls the converter to stop charging the electrical component battery after a certain period of time elapses from start of the charging.

3. The power supply system according to claim 1 or 2, wherein
the electrical component is turned on/off in conjunction with the main switch being turned on/off.

4. The power supply system according to claim 3, wherein
the voltage of the electrical component battery is less than the normal operation voltage of the controller due to current consumption of the electrical component and the controller when the main switch is turned on, and the voltage of the electrical component battery is equal to or more than the normal operation voltage of the controller when the main switch is turned off since only the current consumption of the controller occurs.
